(19) Europäisches Patentamt / European Patent Office / Office européen des brevets

(11) **EP 4 693 195 A1**

(12) **EUROPEAN PATENT APPLICATION**
published in accordance with Art. 153(4) EPC

(43) Date of publication:
**11.02.2026 Bulletin 2026/07**

(21) Application number: **24791699.2**

(22) Date of filing: **30.01.2024**

(51) International Patent Classification (IPC):
**G06T 9/00** (2006.01)

(52) Cooperative Patent Classification (CPC):
**G06N 3/0464; G06N 3/08; G06T 9/00**

(86) International application number:
**PCT/CN2024/074696**

(87) International publication number:
**WO 2024/217111 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 CN 202310461280**

(71) Applicant: **Huawei Technologies Co., Ltd.
Shenzhen, Guangdong 518129 (CN)**

(72) Inventors:
• **MA, Yi**
  **Shenzhen, Guangdong 518129 (CN)**
• **WANG, Jing**
  **Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **IMAGE DECOMPRESSION METHOD AND DEVICE**

(57) This application provides an image decompression method and apparatus. The image decompression method in this application includes: obtaining a first feature tensor, where the first feature tensor corresponds to a first component of a reconstructed image; obtaining a second feature tensor, where the second feature tensor corresponds to a second component of the reconstructed image; performing concatenation and convolution on the first feature tensor and the second feature tensor to obtain a third feature tensor; obtaining a fourth feature tensor based on the third feature tensor and the second feature tensor; and obtaining the reconstructed image based on the first feature tensor and the fourth feature tensor. In embodiments of this application, a structure for fusing a Y component and a UV component is optimized. This can reduce a quantity of channels, to save computing power and implement lightweight. Even if the quantity of channels is not reduced, performance can still be greatly improved.

<u>600</u>

| |
|---|
| Obtain a first feature tensor, where the first feature tensor corresponds to a first component of a reconstructed image ⟩ 601 |
| ↓ |
| Obtain a second feature tensor, where the second feature tensor corresponds to a second component of the reconstructed image ⟩ 602 |
| ↓ |
| Perform concatenation and convolution on the first feature tensor and the second feature tensor to obtain a third feature tensor ⟩ 603 |
| ↓ |
| Obtain a fourth feature tensor based on the third feature tensor and the second feature tensor ⟩ 604 |
| ↓ |
| Obtain the reconstructed image based on the first feature tensor and the fourth feature tensor ⟩ 605 |

FIG. 6

## Description

## TECHNICAL FIELD

This application relates to image processing technologies, and in particular, to an image decompression method and apparatus.

## BACKGROUND

As convolutional neural networks (convolution neural network, CNN) outperform conventional algorithms in computer vision tasks such as image recognition and object detection, more researchers start to explore deep learning-based image/video compression methods. Some researchers design an end-to-end deep learning image/video compression algorithm. For example, modules like an encoding network, an entropy estimation network, an entropy encoding engine, an entropy decoding engine, and a decoding network are integrated as an entirety, or modules like a prediction module and a residual compression module are integrated as an entirety. The encoding network and the decoding network may also be referred to as a transformation module and an inverse transformation module, and typically include a convolutional layer and a non-linear transformation unit.

Joint Photographic Experts Group (Joint Photographic Experts Group, JPEG) Artificial Intelligence (Artificial Intelligence, AI) is the first international standard for AI image compression. In its typical structure, an encoder side performs RGB-YUV color space conversion on images to decompose images into Y components and UV components, and then performs separate encoding and transmission; a decoder side separately restores the Y components and the UV components, and then performs YUV-RGB color space conversion to obtain RGB images. In the foregoing process, there is some specific information exchange between the Y components and the UV components for better compression effect. Information exchange between different components is particularly important for performance optimization.

## SUMMARY

This application provides an image decompression method and apparatus, which can improve performance.

According to a first aspect, this application provides an image decompression method, including: obtaining a first feature tensor, where the first feature tensor corresponds to a first component of a reconstructed image; obtaining a second feature tensor, where the second feature tensor corresponds to a second component of the reconstructed image; performing concatenation and convolution on the first feature tensor and the second feature tensor to obtain a third feature tensor; obtaining a fourth feature tensor based on the third feature tensor and the second feature tensor; and obtaining the reconstructed image based on the first feature tensor and the fourth feature tensor.

In embodiments of this application, a structure for fusing a Y component and a UV component is optimized. The fourth feature tensor (corresponding to a UV component of the reconstructed image) is first obtained based on the third feature tensor (namely, a tensor output after concatenating the first feature tensor (corresponding to a Y component of the reconstructed image) and the second feature tensor (corresponding to the UV component of reconstructed image) and performing convolution) and the second feature tensor, and then the reconstructed image is obtained based on the first feature tensor and the fourth feature tensor. There are three cases for a quantity of channels of the fourth feature tensor: less than, greater than, or equal to a sum of quantities of channels of the first feature tensor and the second feature tensor. In the less-than case, the quantity of channels of the fourth feature tensor can be reduced, to save computing power and implement lightweight. In the greater-than or equal-to case, even if the quantity of channels of the fourth feature tensor is not reduced, the fourth feature vector can be obtained by performing an operation on the third feature tensor and only the second feature tensor, so that performance can be greatly improved.

Optionally, the first component may be a Y component of an image represented by using a YUV color space, and the second component may be a UV component of the image represented by using the YUV color space.

It should be noted that the first component and the second component may alternatively be other components based on a representation manner of the image. This is not specifically limited in embodiments of this application.

As described above, in a JPEG AI structure, an encoder side decomposes images into Y components and UV components, and then performs separate encoding and transmission; and a decoder side separately decodes and restores the Y components and the UV components. It can be learned that the Y component (namely, the first component) and the UV component (namely, the second component) are independently processed over two separate paths. On a path for processing the UV component at the decoder side, the Y component and the UV component are fused.

Concatenating (Concat) the first feature tensor and the second feature tensor may be performing channel concatenation on them. For example, if a scale of the first feature tensor is [128, H, W] and a scale of the second feature tensor is [64, H, W], a scale of a concatenated feature tensor is [192, H, W]. That is, a width and a height remain unchanged, and a quantity of channels is a sum of their quantities of channels. Then, convolution (Conv) is performed on the concatenated feature tensor. The convolution may increase/decrease/not change the quantity of channels. Correspondingly, a quantity of channels of the output third feature tensor is increased/decreased/-not changed. For example, a scale of the third feature tensor is [64, H, W], [128, H, W], or [192, H, W]. The 1st element in the foregoing scale represents a quantity of channels of the feature tensor.

Optionally, the third feature tensor and the second feature tensor may be concatenated to obtain the fourth feature tensor.

The concatenation is channel concatenation. That is, channel concatenation is performed on the third feature tensor and the second feature tensor.

It should be noted that the quantity of channels of the fourth feature tensor is not specifically limited in embodiments of this application. If the quantity of channels of the fourth feature tensor is less than the sum of the quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, after the convolution, element-wise addition is changed to concatenation, and element-wise addition of an output of the convolution and a fused feature tensor of the Y component and the UV component is changed to concatenation of the output and only the UV component, so that performance can be greatly improved.

Optionally, channel extraction may be performed on the second feature tensor to obtain a fifth feature tensor; and the third feature tensor and the fifth feature tensor may be concatenated to obtain the fourth feature tensor.

Channel reduction may be performed on the second feature tensor to obtain the fifth feature tensor, and then the third feature tensor and the fifth feature tensor may be concatenated.

It should be noted that the quantity of channels of the fourth feature tensor is not specifically limited in embodiments of this application. If the quantity of channels of the fourth feature tensor is less than the sum of the quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, after the convolution, element-wise addition is changed to concatenation, and element-wise addition of an output of the convolution and a fused feature tensor of the Y component and the UV component is changed to concatenation of the output and only the UV component, so that performance can be greatly improved.

Optionally, the third feature tensor and the second feature tensor may be added to obtain the fourth feature tensor.

If a quantity of channels of the third feature tensor is equal to that of the second feature tensor, they may be added in an element-wise manner. If the quantity of channels of the third feature tensor is not equal to that of the second feature tensor, they may be added by adding the channels of the feature tensor with the smaller quantity of channels and some channels of the feature tensor with the larger quantity of channels in an element-wise manner. For example, the third feature tensor has 64 channels, and the second feature tensor has 32 channels. The 32 channels of the second feature tensor and the first 32 channels of the third feature tensor may be added in an element-wise manner; the 32 channels of the second feature tensor and the last 32 channels of the third feature tensor may be added in an element-wise manner; or the like. An addition method in this case is not specifically limited in embodiments of this application.

It should be noted that the quantity of channels of the fourth feature tensor is not specifically limited in embodiments of this application. If the quantity of channels of the fourth feature tensor is less than the sum of the quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, after the convolution, element-wise addition of an output of the convolution and a fused feature tensor of the Y component and the UV component is changed to element-wise addition of the output and only the UV component, so that performance can be greatly improved.

Optionally, channel extraction may be performed on the second feature tensor to obtain a fifth feature tensor; and the third feature tensor and the fifth feature tensor may be added to obtain the fourth feature tensor.

If a quantity of channels of the third feature tensor is less than that of the second feature tensor, channel reduction may be performed on the second feature tensor to obtain the fifth feature tensor, so that a quantity of channels of the fifth feature tensor is equal to that of the second feature tensor; and then the third feature tensor and the fifth feature tensor may be added in an element-wise manner.

It should be noted that the quantity of channels of the fourth feature tensor is not specifically limited in embodiments of this application. In the foregoing case, if the quantity of channels of the fourth feature tensor is less than the sum of the quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, after the convolution, element-wise addition of an output of the convolution and a fused feature tensor of the Y component and the UV component is changed to element-wise addition of the output and only the UV component, so that performance can be greatly improved.

The UV component of the reconstructed image may be obtained through some processing (refer to the following embodiments) on the fourth feature tensor obtained through the fusion, and then combined with the Y component of the reconstructed image, to form the complete reconstructed image.

According to a second aspect, this application provides an image decompression apparatus, including: an obtaining module, configured to obtain a first feature tensor, where the first feature tensor corresponds to a first component of a reconstructed image, and obtain a second feature tensor, where the second feature tensor corresponds to a second component of the reconstructed image; a processing module, configured to perform concatenation and convolution on the first feature tensor and the second feature tensor to obtain a third feature tensor, and obtain a fourth feature tensor based on the third feature tensor and the second feature tensor; and a reconstruction module, configured to obtain the reconstructed image based on the first feature tensor and the fourth feature tensor.

In a possible implementation, the processing module is specifically configured to concatenate the third feature tensor and the second feature tensor to obtain the fourth feature tensor.

In a possible implementation, the processing module is specifically configured to add the third feature tensor and the second feature tensor to obtain the fourth feature tensor.

In a possible implementation, the processing module is specifically configured to perform channel extraction on the second feature tensor to obtain a fifth feature tensor; and concatenate the third feature tensor and the fifth feature tensor to obtain the fourth feature tensor.

In a possible implementation, the processing module is specifically configured to perform channel extraction on the second feature tensor to obtain a fifth feature tensor; and add the third feature tensor and the fifth feature tensor to obtain the fourth feature tensor.

In a possible implementation, the first component is a Y component, and the second component is a UV component.

According to a third aspect, this application provides an electronic device, including: one or more processors; and a memory, configured to store one or more programs. When the one or more programs are executed by the one or more processors, the one or more processors are enabled to implement the method according to any one of the implementations of the first aspect.

According to a fourth aspect, this application provides a computer-readable storage medium, including a computer program. When the computer program is executed on a computer, the computer is enabled to perform the method according to any one of the implementations of the first aspect.

According to a fifth aspect, this application provides a computer program. When the computer program is executed by a computer, the computer is configured to perform the method according to any one of the implementations of the first aspect.

According to a sixth aspect, this application further provides a computer program product. The computer program product includes computer program code. When the computer program code is run on a computer, the computer is enabled to perform the operations and/or processing performed by the electronic device in any one of the foregoing method embodiments.

## BRIEF DESCRIPTION OF DRAWINGS

FIG. 1 is an example diagram of an end-to-end deep learning image coding framework;

FIG. 2 is an example diagram of an end-to-end deep learning video coding framework;

FIG. 3 is an example diagram of an application scenario according to an embodiment of this application;

FIG. 4 is an example diagram of an application scenario according to an embodiment of this application;

FIG. 5a is a diagram of a typical structure in a JPEG AI standard;

FIG. 5b is a diagram of a structure in the thick line box in FIG. 5a;

FIG. 6 is a flowchart of a process 600 of an image decompression method according to an embodiment of this application;

FIG. 7a is a diagram of a fusion structure;

FIG. 7b is a diagram of a fusion structure;

FIG. 7c is a diagram of a fusion structure;

FIG. 7d is a diagram of a fusion structure;

FIG. 8 is a diagram of a structure of JEPG AI using a fusion structure;

FIG. 9 is a diagram of a structure of JEPG AI using a fusion structure;

FIG. 10 is a diagram of a structure of JEPG AI using a fusion structure;

FIG. 11 is a diagram of a structure of JEPG AI using a fusion structure; and

FIG. 12 is a diagram of a structure of an image decompression apparatus 1200 according to an embodiment of this application.

## DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely used for differentiation and description, but should not be understood as an indication or implication of relative importance or an indication or implication of a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

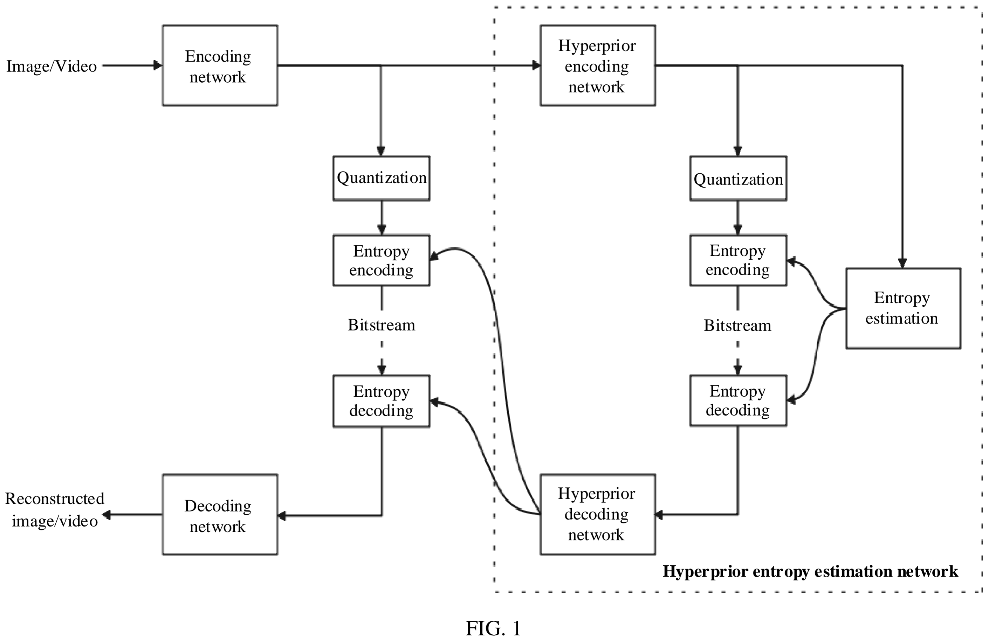

FIG. 1 is an example diagram of an end-to-end deep learning image coding framework. As shown in FIG. 1, the image coding framework includes an encoder side and a decoder side. The encoder side includes: an encoding network (Encoder), a quantization module, a hyperprior encoding network (Hyper Encoder), a hyperprior decoding network, entropy estimation, and an entropy encoding engine (common entropy encoding engines include an arithmetic encoder (Arithmetic Encoder, AE), an asymmetric numeral system (Asymmetric Numeral System, ANS), and the like). The decoder side includes: the hyperprior decoding network (Hyper Decoder), a decoding network (Decoder), entropy estimation, and an entropy decoding engine (common entropy decoding engines include an arithmetic decoder (Arithmetic Decoder, AD), an ANS, and the like).

At the encoder side, an original image is transformed from an image domain to a feature domain after being processed by the encoding network. A transformed image feature is encoded into a to-be-transmitted or to-be-stored bitstream after being processed by the quantization module and the entropy encoding engine. At the decoder side, a bitstream is decoded into an image feature after being processed by the entropy decoding engine. The image feature is transformed from the feature domain to the image domain after being processed by the decoding network, to obtain a reconstructed image. The entropy estimation network estimates and obtains an estimated probability value of each feature element based on the image feature. The probability value is used for processing of the entropy encoding engine and the entropy decoding engine.

In embodiments, both the encoding network (Encoder) and the decoding network (Decoder) have a non-linear transformation unit.

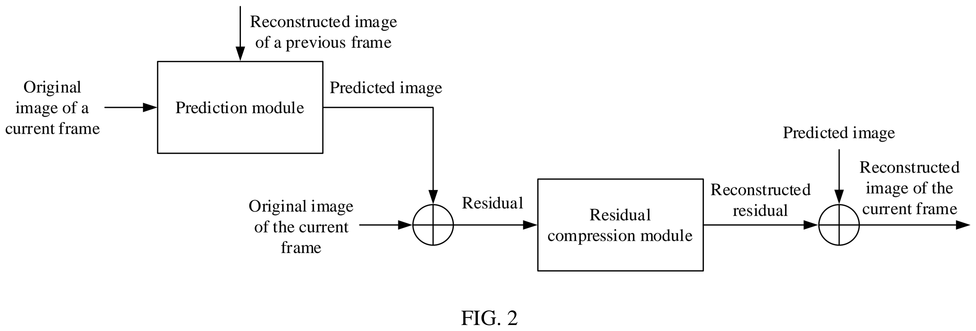

FIG. 2 is an example diagram of an end-to-end deep learning video coding framework. As shown in FIG. 2, the video coding framework includes a prediction module (predict model) and a residual compression (residual compress) module.

The prediction module predicts a current frame by using a reconstructed image of a previous frame to obtain a predicted image. The residual compression module compresses a residual between an original image and a predicted image of the current frame, and then decompresses a compressed residual to obtain a reconstructed residual, and sums up the reconstructed residual and the predicted image to obtain a reconstructed image of the current frame. Both an encoding sub-network and a decoding sub-network in the prediction module and the residual compression module have a non-linear transformation unit.

In embodiments, both the prediction module (predict model) and the residual compression (residual compress) module have the non-linear transformation unit.

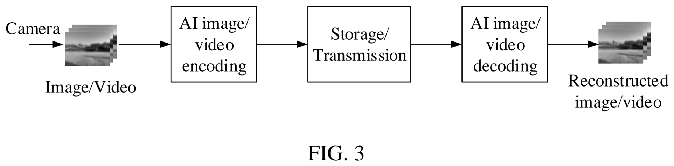

FIG. 3 is an example diagram of an application scenario according to an embodiment of this application. As shown in FIG. 3, the application scenario may be a service related to image/video capturing, storage, or transmission in a terminal, a cloud server, or video surveillance, for example, photographing/video recording by a terminal, an album, a cloud album, or video surveillance.

Encoder side: A camera (Camera) captures an image/video. An artificial intelligence (artificial intelli-

gence, AI) image/video encoding network performs feature extraction on the image/video to obtain an image feature with low redundancy, and then performs entropy encoding based on the image feature to obtain a bitstream/image file.

Decoder side: When the image/video needs to be output, an AI image/video decoding network performs entropy decoding on the bitstream/image file to obtain an image feature, and then performs reverse feature extraction on the image feature to obtain a reconstructed image/video.

A storage/transmission module stores (for example, photographing by a terminal, video surveillance, or a cloud server) or transmits (for example, a cloud service or a live broadcast technology) the bitstream/image file obtained through compression for different services.

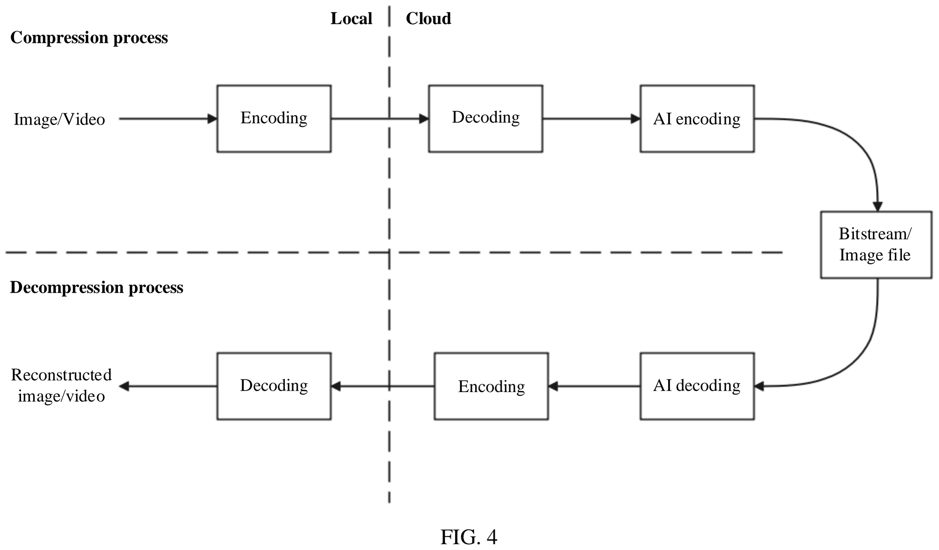

FIG. 4 is an example diagram of an application scenario according to an embodiment of this application. As shown in FIG. 4, the application scenario may be a service related to image/video capturing, storage, or transmission in cloud or video surveillance, for example, a cloud album, video surveillance, or live broadcast.

Encoder side: A local side obtains an image/video, encodes the image/video to obtain a compressed image/video, and then sends a compressed image/video to a cloud side. The cloud side decodes the compressed image/video to obtain the image/video, and then performs AI encoding on the image/video to obtain a bitstream/image file and stores the bitstream/image file.

Decoder side: When the local side needs to obtain the image/video from the cloud side, the cloud side performs AI decoding on the bitstream/image file to obtain the image/video, encodes the image/video to obtain a compressed image/video, and sends the compressed image/video to the local side. The local side decodes the compressed image/video to obtain the image/video. For a structure of the cloud side and a usage of each module, refer to the structure and the usage of each module in FIG. 4. Details are not described herein in embodiments of this application.

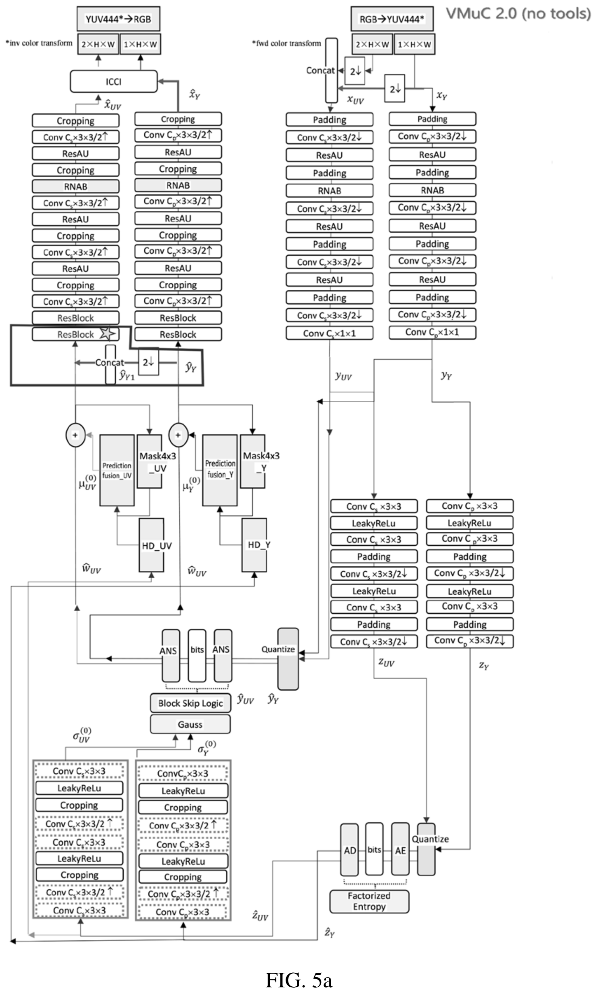

FIG. 5a is a diagram of a typical structure in a JPEG AI standard. As shown in FIG. 5a, an encoder side performs RGB-YUV color space conversion to decompose images into Y components and UV components, and then performs separate encoding and transmission; and a decoder side separately restores the Y components and the UV components, and then performs YUV-RGB color space conversion to obtain RGB images. At the encoder side and the decoder side, there is some specific information exchange between the Y components and the UV components for better compression effect.

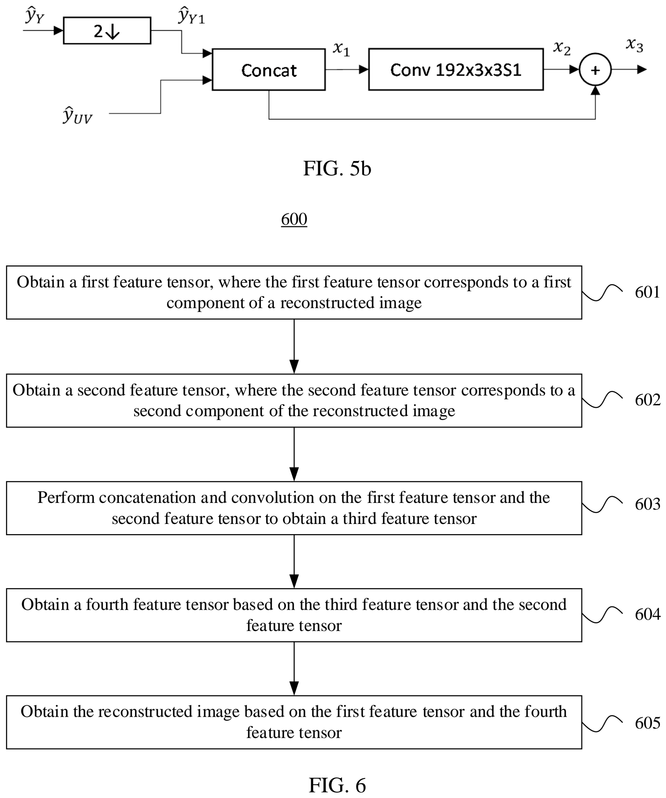

FIG. 5b is a diagram of a structure in the thick line box in FIG. 5a. As shown in FIG. 5b, a scale of $\hat{y}_{Y1}$ is [128, H, W], a scale of $\hat{y}_{UV}$ is [64, H, W], and they have an equal width and height. Processing steps are as follows:

(1) Perform downsampling once on $\hat{y}_Y$ to obtain $\hat{y}_{Y1}$.
(2) Input $\hat{y}_{Y1}$ and $\hat{y}_{UV}$ into a concatenation (Concat) module, and perform channel concatenation on them to obtain $x_I$. A scale of $x_I$ is [192, H, W].
(3) Input $x_I$ into a convolution (Conv) module, and output $x_2$. A scale of $x_2$ is [192, H, W]. In the convolution module, 192 indicates a quantity of output channels of the convolution module, 3x3 indicates a size of a convolution kernel of the convolution module, and S1 indicates a stride of the convolution module.
(4) Add $x_1$ and $x_2$ in an element-wise manner to obtain $x_3$. A scale of $x_3$ is [192, H, W].

The structure in the thick line box is a ResBlock structure, which has the following characteristic: An input feature tensor and output feature tensor of the convolution module have a same quantity of channels, so that feature tensors before and after convolution can be directly added through skip connection. However, in the JPEG AI structure, an input feature tensor is formed by concatenating the Y component and the UV component, often resulting in a large quantity of channels. If a quantity of channels is reduced to implement lightweight, computational complexity is reduced, but performance sharply deteriorates.

To resolve the foregoing technical problem, in the foregoing encoding/decoding network and application scenario, embodiments of this application provide an image decompression method, to improve performance of an image/video compression algorithm. It should be noted that an image in embodiments of this application may be a separate image, for example, a photo or a picture, or may be image frames in a video. In other words, the method in embodiments of this application may be used to process a separate image or an image frame sequence in a video. Unless otherwise specified, a video/image is collectively referred to as an image in this specification.

FIG. 6 is a flowchart of a process 600 of an image decompression method according to an embodiment of this application. The process 600 may be performed by the decoder side in the foregoing embodiments. The process 600 is described as a series of steps or operations. It should be understood that the steps or operations of the process 600 may be performed in various sequences and/or simultaneously, and are not limited to an execution sequence shown in FIG. 6. The process 600 includes the following steps.

Step 601: Obtain a first feature tensor. The first feature tensor corresponds to a first component of a reconstructed image.

Step 602: Obtain a second feature tensor. The second feature tensor corresponds to a second component of the reconstructed image.

Optionally, the first component may be a Y component of an image represented by using a YUV color space, and the second component may be a UV component of the image represented by using the YUV color space.

It should be noted that the first component and the second component may alternatively be other components based on a representation manner of the image. This is not specifically limited in embodiments of this application.

As described above, in a JPEG AI structure, at an encoder side, an image is decomposed into a Y component and a UV component, which are then separately encoded and transmitted; and at a decoder side, the Y component and the UV component are separately decoded and restored. It can be learned that the Y component (namely, the first component) and the UV component (namely, the second component) are independently processed on two separate paths. With reference to FIG. 5a, on a path for processing the UV component at the decoder side, the Y component and the UV component are fused, that is, operations in the thick line box shown in FIG. 5b are performed. It is assumed that the structure (configured to fuse the Y component and the UV component) in the thick line box is regarded as a black box. In this case, the black box has two inputs: the first feature tensor (it corresponds to the Y component and comes from a path for processing the Y component; and for its specific obtaining process, refer to the following embodiments) and the second feature tensor (it corresponds to the UV component and comes from the path for processing the UV component; and for its specific obtaining process, refer to the following embodiments). The black box has one output (a fourth feature tensor below).

In embodiments of this application, a structure for implementing a fusion function is improved. Refer to the following steps.

Step 603: Perform concatenation and convolution on the first feature tensor and the second feature tensor to obtain a third feature tensor.

Concatenating (Concat) the first feature tensor and the second feature tensor may be performing channel concatenation on them. For example, if a scale of the first feature tensor is [128, H, W] and a scale of the second feature tensor is [64, H, W], a scale of a concatenated feature tensor is [192, H, W]. That is, a width and a height remain unchanged, and a quantity of channels is a sum of their quantities of channels. Then, convolution (Conv) is performed on the concatenated feature tensor. The convolution may increase/decrease/not change the quantity of channels. Correspondingly, a quantity of channels of the output third feature tensor is increased/decreased/not changed. For example, a scale of the third feature tensor is [64, H, W], [128, H, W], or [192, H, W].

Step 604: Obtain a fourth feature tensor based on the third feature tensor and the second feature tensor.

Optionally, the third feature tensor and the second feature tensor may be concatenated to obtain the fourth feature tensor.

The concatenation is channel concatenation. That is, channel concatenation is performed on the third feature tensor and the second feature tensor.

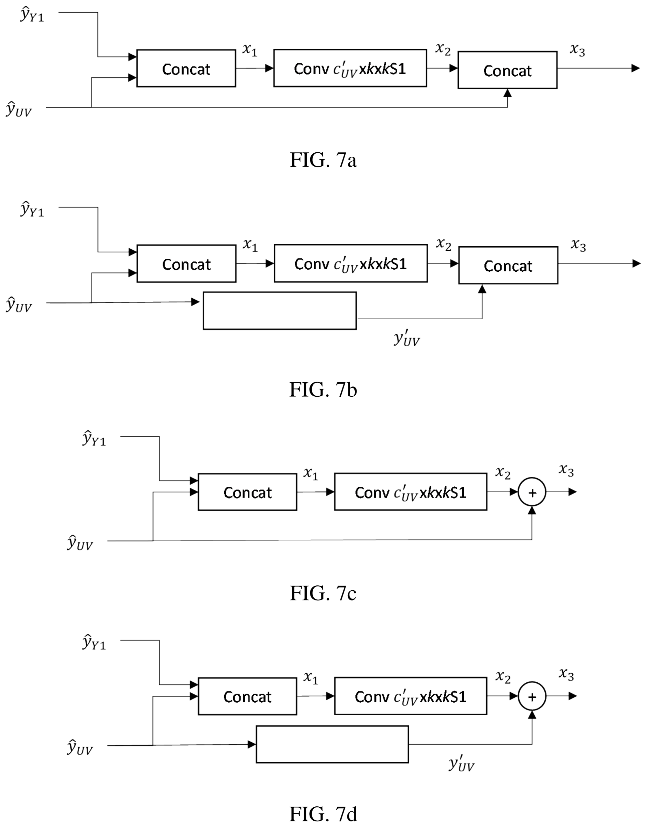

FIG. 7a is a diagram of a fusion structure. As shown in FIG. 7a, the fusion structure concatenates the first feature tensor and the second feature tensor and performs convolution to obtain the third feature tensor, and concatenates the third feature tensor and the second feature tensor to obtain the fourth feature tensor. A scale of the first feature tensor $\hat{y}_{Y1}$ is [$c_Y$, H, W]. A scale of the second feature tensor $\hat{y}_{UV}$ is [$c_{UV}$, H, W]. They have an equal width and height. Steps are as follows:

(1) Input $\hat{y}_{Y1}$ and $\hat{y}_{UV}$ into a Concat module, and perform channel concatenation on them to obtain $x_I$. A scale of $x_I$ is [$c_Y + c_{UV}$, H, W].

(2) Input $x_I$ into a Conv module and output the third feature tensor $x_2$. A scale of $x_2$ is $[c'_{UV}, \mathrm{H}, \mathrm{W}]$ .

(3) Input $\hat{y}_{UV}$ and $x_2$ into a Concat module, and perform channel concatenation on them to obtain the fourth feature tensor $x_3$. A scale of $x_3$ is $[c'_{UV} + c_{UV}, \mathrm{H}, \mathrm{W}]$ .

It should be noted that a quantity of channels of the fourth feature tensor is not specifically limited in embodiments of this application. For example, $c'_{UV} + c_{UV}$ may be less than $c_Y + c_{UV}$; $c'_{UV} + c_{UV}$ may be greater than $c_Y + c_{UV}$; $c'_{UV} + c_{UV}$ may be less than $c_Y$; or the like. In the foregoing case, if the quantity of channels of the fourth feature tensor is less than a sum of quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, in comparison with the embodiment shown in FIG. 5b, in this embodiment, after the convolution, element-wise addition is changed to concatenation, and element-wise addition of an output of the convolution and a fused feature tensor of the Y component and the UV component is changed to concatenation of the output and only the UV component, so that performance can be greatly improved.

Optionally, channel extraction may be performed on the second feature tensor to obtain a fifth feature tensor; and the third feature tensor and the fifth feature tensor may be concatenated to obtain the fourth feature tensor.

Channel reduction may be performed on the second feature tensor to obtain the fifth feature tensor, and then the third feature tensor and the fifth feature tensor may be concatenated.

FIG. 7b is a diagram of a fusion structure. As shown in FIG. 7b, the fusion structure concatenates the first feature tensor and the second feature tensor and performs convolution to obtain the third feature tensor, performs channel extraction on the second feature tensor to obtain the fifth feature tensor, and concatenates the third feature tensor and the fifth feature tensor to obtain the fourth feature tensor. A scale of the first feature tensor $\hat{y}_{Y1}$ is [$c_Y$, H, W]. A scale of the second feature tensor $\hat{y}_{UV}$ is [$c_{UV}$, H, W]. They have an equal width and height. Steps are as follows:

(1) Input $\hat{y}_{Y1}$ and $\hat{y}_{UV}$ into a Concat module, and perform channel concatenation on them to obtain $x_l$. A scale of $x_l$ is [$c_Y + c_{UV}$, H, W].

(2) Input $x_l$ into a Conv module and output the third feature tensor $x_2$. A scale of $x_2$ is $[c'_{UV}, \text{H}, \text{W}]$.

(3) Extract $c''_{UV}$ channels from $\hat{y}_{UV}$ according to a preset rule to obtain the fifth feature tensor $y'_{UV}$. A scale of $y'_{UV}$ is $[c''_{UV}, \text{H}, \text{W}]$. $c''_{UV}$ may or may not be equal to $c'_{UV}$. This is not specifically limited herein.

(4) Input $y'_{UV}$ and $x_2$ into a Concat module, and perform channel concatenation on them to obtain the fourth feature tensor $x_3$. A scale of $x_3$ is $[c'_{UV} + c''_{UV}, \text{H}, \text{W}]$.

It should be noted that a quantity of channels of the fourth feature tensor is not specifically limited in embodiments of this application. For example, $c'_{UV} + c''_{UV}$ may be less than $c_Y + c_{UV}$; $c'_{UV} + c''_{UV}$ may be greater than $c_Y + c_{UV}$; $c'_{UV} + c''_{UV}$ may be less than $c_Y$ or $c_{UV}$; or the like. In the foregoing case, if the quantity of channels of the fourth feature tensor is less than a sum of quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, in comparison with the embodiment shown in FIG. 5b, in this embodiment, after the convolution, element-wise addition is changed to concatenation, and element-wise addition of an output of the convolution and a fused feature tensor of the Y component and the UV component is changed to concatenation of the output and only the UV component, so that performance can be greatly improved.

Optionally, the third feature tensor and the second feature tensor may be added to obtain the fourth feature tensor.

If a quantity of channels of the third feature tensor is equal to that of the second feature tensor, they may be added in an element-wise manner. If the quantity of channels of the third feature tensor is not equal to that of the second feature tensor, they may be added by adding the channels of the feature tensor with the smaller quantity of channels and some channels of the feature tensor with the larger quantity of channels in an element-wise manner. For example, the third feature tensor has 64 channels, and the second feature tensor has 32 channels. The 32 channels of the second feature tensor and the first 32 channels of the third feature tensor may be added in an element-wise manner; the 32 channels of the second feature tensor and the last 32 channels of the third feature tensor may be added in an element-wise manner; or the like. An addition method in this case is not specifically limited in embodiments of this application.

FIG. 7c is a diagram of a fusion structure. As shown in FIG. 7c, the fusion structure concatenates the first feature tensor and the second feature tensor and performs convolution to obtain the third feature tensor, and adds the third feature tensor and the second feature tensor to obtain the fourth feature tensor. A scale of the first feature tensor $\hat{y}_{Y1}$ is [$c_Y$, H, W]. A scale of the second feature tensor $\hat{y}_{UV}$ is [$c_{UV}$, H, W]. They have an equal width and height. Steps are as follows:

(1) Input $\hat{y}_{Y1}$ and $\hat{y}_{UV}$ into a Concat module, and perform channel concatenation on them to obtain $x_l$. A scale of $x_l$ is [$c_Y + c_{UV}$, H, W].
(2) Input $x_l$ into a Conv module and output the third feature tensor $x_2$. A scale of $x_2$ is $[c'_{UV}, \text{H}, \text{W}]$.
(3) Add $\hat{y}_{UV}$ and $x_2$ to obtain the fourth feature tensor $x_3$. A scale of $x_3$ is $[c''_{UV}, \text{H}, \text{W}]$. $c''_{UV}$ is the larger one of $c_{UV}$ and $c'_{UV}$.

It should be noted that a quantity of channels of the fourth feature tensor is not specifically limited in embodiments of this application. For example, $c''_{UV}$ may be less than $c_Y + c_{UV}$; $c''_{UV}$ may be greater than $c_Y + c_{UV}$; $c''_{UV}$ may be less than $c_Y$; or the like. In the foregoing case, if the quantity of channels of the fourth feature tensor is less than a sum of quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, in comparison with the embodiment shown in FIG. 5b, in this embodiment, after the convolution, element-wise addition of an output of the convolution and a fused feature tensor of the Y component and the UV component is changed to element-wise addition of the output and only the UV component, so that performance can be greatly improved.

Optionally, channel extraction may be performed on the second feature tensor to obtain a fifth feature tensor; and the third feature tensor and the fifth feature tensor may be added to obtain the fourth feature tensor.

If a quantity of channels of the third feature tensor is less than that of the second feature tensor, channel reduction may be performed on the second feature tensor to obtain the fifth feature tensor, so that a quantity of channels of the fifth feature tensor is equal to that of the second feature tensor; and then the third feature tensor and the fifth feature tensor may be added in an element-wise manner.

FIG. 7d is a diagram of a fusion structure. As shown in FIG. 7d, the fusion structure concatenates the first feature tensor and the second feature tensor and performs convolution to obtain the third feature tensor, performs channel extraction on the second feature tensor to obtain the fifth feature tensor, and adds the third feature tensor and the fifth feature tensor to obtain the fourth feature tensor. A scale of the first feature tensor $\hat{y}_{Y1}$ is [$c_Y$, H, W]. A scale of the second feature tensor $\hat{y}_{UV}$ is [$c_{UV}$, H, W]. They have an equal width and height. Steps are as follows:

(1) Input $\hat{y}_{Y1}$ and $\hat{y}_{UV}$ into a Concat module, and perform channel concatenation on them to obtain $x_l$. A scale of $x_l$ is [$c_Y + c_{UV}$, H, W].

(2) Input $x_l$ into a Conv module and output the third feature tensor $x_2$. A scale of $x_2$ is $[c'_{UV}, \text{H}, \text{W}]$.

(3) Extract $c'_{UV}$ channels from $\hat{y}_{UV}$ according to a preset rule to obtain the fifth feature tensor $y'_{UV}$. A scale of $y'_{UV}$ is $[c'_{UV}, \text{H}, \text{W}]$.

(4) Add $y'_{UV}$ and $x_2$ to obtain the fourth feature tensor $x_3$. A scale of $x_3$ is $[c'_{UV}, \text{H}, \text{W}]$.

It should be noted that a quantity of channels of the fourth feature tensor is not specifically limited in embodiments of this application. For example, $c'_{UV}$ may be less than $c_Y + c_{UV}$; $c'_{UV}$ may be greater than $c_Y + c_{UV}$; $c'_{UV}$ may be less than $c_Y$ or $c_{UV}$; or the like. In the foregoing case, if the quantity of channels of the fourth feature tensor is less than a sum of quantities of channels of the first feature tensor and the second feature tensor, the quantity of channels can be reduced, to save computing power and implement lightweight. Even if the quantity of channels of the fourth feature tensor is greater than the sum of the quantities of channels of the first feature tensor and the second feature tensor, in comparison with the embodiment shown in FIG. 5b, in this embodiment, after the convolution, element-wise addition of an output of the convolution and a fused feature tensor of the Y component and the UV component is changed to element-wise addition of the output and only the UV component, so that performance can be greatly improved.

Step 605: Obtain the reconstructed image based on the first feature tensor and the fourth feature tensor.

The UV component of the reconstructed image may be obtained through some processing (refer to the following embodiments) on the fourth feature tensor obtained through the fusion, and then combined with the Y component of the reconstructed image obtained by processing the first feature tensor, to form the complete reconstructed image.

In embodiments of this application, the structure for fusing the Y component and the UV component is optimized. This can reduce a quantity of channels, to save computing power and implement lightweight. Even if the quantity of channels is not reduced, the performance can still be greatly improved.

The following describes the technical solutions of this application through several specific embodiments.

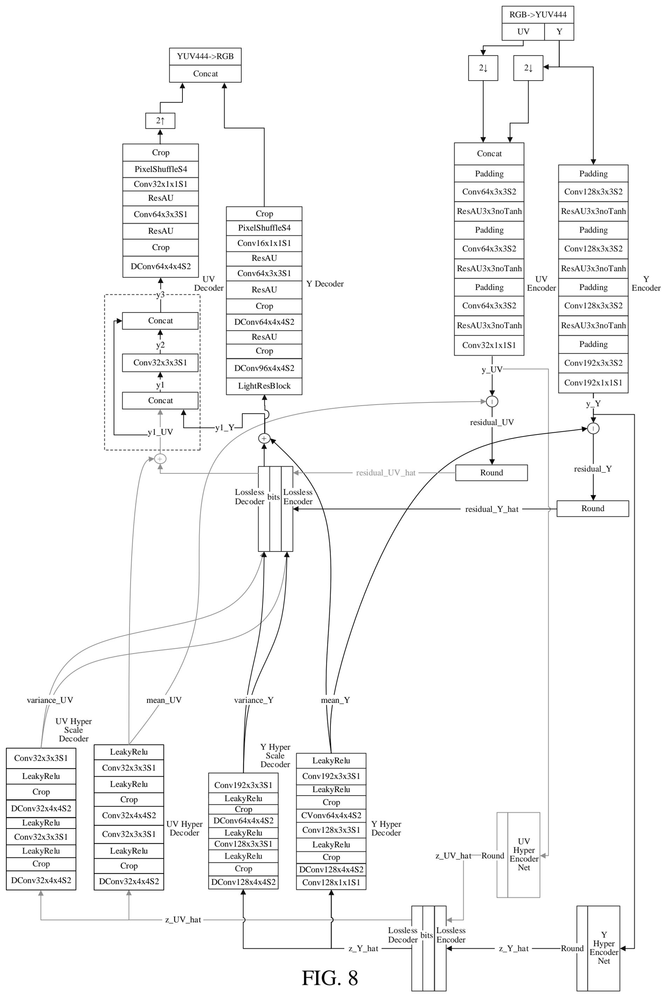

FIG. 8 is a diagram of a structure of JEPG AI using a fusion structure. As shown in FIG. 8, the JEPG AI uses the fusion structure shown in FIG. 7a or FIG. 7b, and its processing process is as follows:

Encoder side:

1. Convert an original RGB image into a YUV444 image through color space conversion.
2. Decompose the YUV444 image obtained in step 1 by channel, to obtain a Y component and a UV component.
3. Input the Y component obtained in step 2 into a Y component encoding (Y Encoder) network, and perform downsampling four times to obtain y_Y.
4. Process y_Y obtained in step 3 through a Y component hyperprior encoding network (Y Hyper Encoder Net), and then perform round-to-nearest quantization to obtain z_Y_hat.
5. Process z_Y_hat obtained in step 4 through an entropy encoder (Lossless Encoder) to obtain a first bitstream, which is denoted as bit_z_Y.
6. Process z_Y_hat obtained in step 4 through a Y component hyperprior decoding network (Y Hyper Decoder) to obtain mean_Y.
7. Process z_Y_hat obtained in step 4 through a Y component hyperprior variance decoding network (Y Hyper Scale Decoder) to obtain variance_Y.
8. Subtract mean_Y obtained in step 6 from y_Y obtained in step 3 to obtain residual _Y, and perform round-to-nearest quantization to obtain residual_Y_hat.
9. Obtain a Gaussian probability distribution function with a mean of 0 and a standard deviation of variance_Y based on variance_Y generated in step 7, and process residual_Y_hat obtained in step 8 through an entropy encoder (Lossless Encoder) to obtain a second bitstream, which is denoted as bit_y_Y.

10. Separately perform downsampling once on the Y component and the UV component obtained in step 2, and then input downsampled components into a UV component encoding (UV Encoder) network and perform downsampling three times in the UV Encoder network to obtain y_UV. (The UV Encoder network includes three times of downsampling.)

11. Process y_UV obtained in step 10 through a UV component hyperprior encoding network (UV Hyper Encoder Net), and then perform round-to-nearest quantization to obtain z_UV_hat.

12. Process z_UV_hat obtained in step 11 through the entropy encoder (Lossless Encoder) to obtain a third bitstream, which is denoted as bit_z_UV.

13. Process z_UV_hat obtained in step 11 through a UV component hyperprior decoding network (UV Hyper Decoder) to obtain mean_UV.

14. Process z_UV_hat obtained in step 11 through a UV component hyperprior variance decoding network (UV Hyper Scale Decoder) to obtain variance_UV.

15. Subtract mean_UV output in step 13 from y_UV output in step 10 to obtain residual_UV, and perform round-to-nearest quantization to obtain residual_UV_hat.

16. Obtain a Gaussian probability distribution function with a mean of 0 and a standard deviation of variance_UV based on variance_UV generated in step 14, and process residual_UV_hat obtained in step 15 through the entropy encoder (Lossless Encoder) to obtain a fourth bitrate, which is denoted as bit_y_UV.

17. Obtain a sum of the foregoing four bitstreams as a final encoded bitstream.

Decoder side:

1. Process the first bitstream bit_z_Y through an entropy decoder (Lossless Decoder) to obtain z_Y_hat.

2. Process z_Y_hat obtained in step 1 through the Y component hyperprior decoding network (Y Hyper Decoder) to obtain mean_Y.

3. Process z_Y_hat obtained in step 1 through the Y component hyperprior variance decoding network (Y Hyper Scale Decoder) to obtain variance_Y.

4. Obtain a Gaussian probability distribution function with a mean of 0 and a standard deviation of variance_Y based on variance_Y generated in step 2, and process the second bitstream bit_y_Y through an entropy decoder (Lossless Decoder) to obtain residual_Y_hat.

5. Add residual_Y_hat obtained in step 4 and mean_Y obtained in step 2, to obtain y1_Y.

6. Process y1_Y obtained in step 5 through a Y component decoding (Y Decoder) network to obtain a Y component of a reconstructed image.

7. Process the third bitstream bit_z_UV through the entropy decoder (Lossless Decoder) to obtain z_UV_hat.

8. Process z_UV_hat obtained in step 7 through the UV component hyperprior decoding network (UV Hyper Decoder) to obtain mean_UV.

9. Process z_UV_hat obtained in step 7 through the UV component hyperprior variance decoding network (UV Hyper Scale Decoder) to obtain variance_UV.

10. Obtain a Gaussian probability distribution function with a mean of 0 and a standard deviation of variance_UV based on variance_UV generated in step 9, and process the fourth bitstream bit_y_UV through the entropy decoder (Lossless Decoder) to obtain residual_UV_hat.

11. Add residual_UV_hat obtained in step 10 and mean_UV obtained in step 8, to obtain y1_UV.

12. Perform channel concatenation on y1_Y obtained in step 5 and y1_UV obtained in step 11, to obtain y1.

13. Process y1 obtained in step 12 through a convolutional layer to obtain y2.

14. Perform channel concatenation on y2 obtained in step 13 and y1_UV obtained in step 11, to obtain y3.

15. Input y3 obtained in step 14 into a UV component decoding (UV Decoder) network, perform upsampling three times in the UV Decoder network (optionally, the three times of upsampling may be implemented by performing one scale of upsampling through one deconvolution module and then two scales of upsampling through pixel shuffle (pixelshuffle)), and then perform upsampling once on an output of the UV Decoder (optionally, the upsampling may be implemented through nearest-neighbor interpolation), to obtain a UV component of the reconstructed image. (The UV Decoder network includes three times of upsampling.)

16. Concatenate the Y component obtained in step 6 and the UV component obtained in step 15, and then perform color conversion to obtain a reconstructed RGB image.

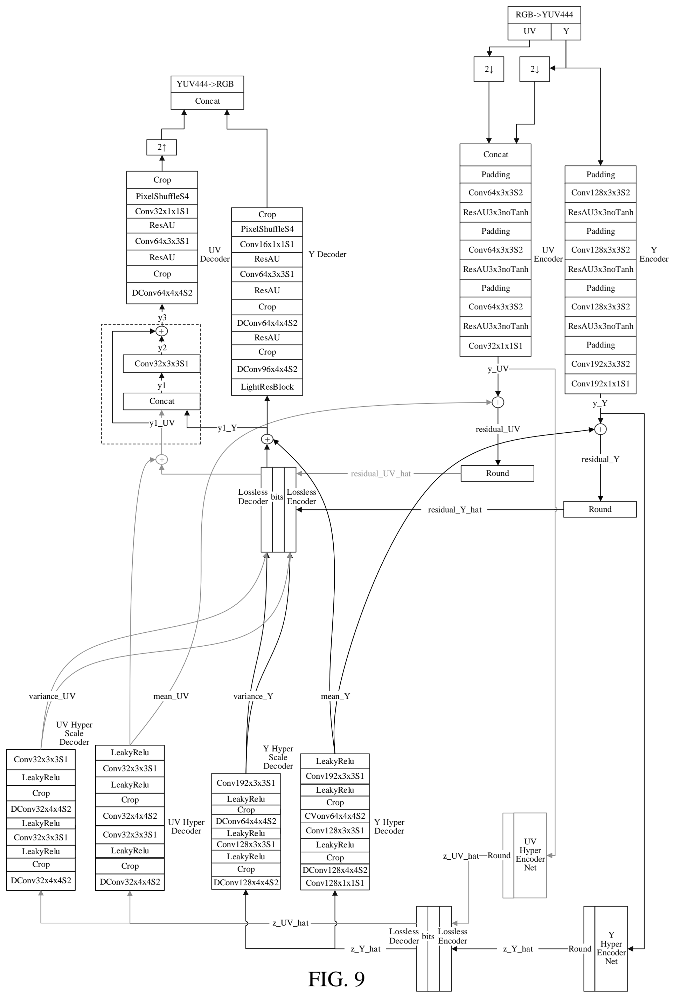

FIG. 9 is a diagram of a structure of JEPG AI using a fusion structure. As shown in FIG. 9, the JEPG AI uses the fusion structure shown in FIG. 7c or FIG. 7d, and its processing process is as follows:

Encoder side:

1. Convert an original RGB image into a YUV444 image through color space conversion.

2. Decompose the YUV444 image obtained in step 1 by channel, to obtain a Y component and a UV component.

3. Input the Y component obtained in step 2 into a Y component encoding (Y Encoder) network, and perform downsampling four times to obtain y_Y.

4. Process y_Y obtained in step 3 through a Y component hyperprior encoding network (Y Hyper Encoder Net), and then perform round-to-nearest quantization to obtain z_Y_hat.

5. Process z_Y_hat obtained in step 4 through an entropy encoder (Lossless Encoder) to obtain a first bitstream, which is denoted as bit_z_Y.

6. Process z_Y_hat obtained in step 4 through a Y component hyperprior decoding network (Y Hyper Decoder) to obtain mean_Y.

7. Process z_Y_hat obtained in step 4 through a Y component hyperprior variance decoding network (Y Hyper Scale Decoder) to obtain variance_Y.

8. Subtract mean_Y obtained in step 6 from y_Y obtained in step 3 to obtain residual_Y, and perform round-to-nearest quantization to obtain residual_Y_hat.

9. Obtain a Gaussian probability distribution function with a mean of 0 and a standard deviation of variance_Y based on variance_Y generated in step 7, and process residual_Y_hat obtained in step 8 through an entropy encoder (Lossless Encoder) to obtain a second bitstream, which is denoted as bit_y_Y.

10. Separately perform downsampling once on the Y component and the UV component obtained in step 2, and then input downsampled components into a UV component encoding (UV Encoder) network and perform downsampling three times in the UV Encoder network to obtain y_UV. (The UV Encoder network includes three times of downsampling.)

11. Process y_UV obtained in step 10 through a UV component hyperprior encoding network (UV Hyper Encoder Net), and then perform round-to-nearest quantization to obtain z_UV_hat.

12. Process z_UV_hat obtained in step 11 through the entropy encoder (Lossless Encoder) to obtain a third bitstream, which is denoted as bit_z_UV.

13. Process z_UV_hat obtained in step 11 through a UV component hyperprior decoding network (UV Hyper Decoder) to obtain mean_UV.

14. Process z_UV_hat obtained in step 11 through a UV component hyperprior variance decoding network (UV Hyper Scale Decoder) to obtain variance_UV.

15. Subtract mean_UV output in step 13 from y_UV output in step 10 to obtain residual_ UV, and perform round-to-nearest quantization to obtain residual_UV_hat.

16. Obtain a Gaussian probability distribution function with a mean of 0 and a standard deviation of variance_UV based on variance_UV generated in step 14, and process residual_UV_hat obtained in step 15 through the entropy encoder (Lossless Encoder) to obtain a fourth bitrate, which is denoted as bit_y_UV.

17. Obtain a sum of the foregoing four bitstreams as a final encoded bitstream.

Decoder side:

1. Process the first bitstream bit_z_Y through an entropy decoder (Lossless Decoder) to obtain z_Y_hat.

2. Process z_Y_hat obtained in step 1 through the Y component hyperprior decoding network (Y Hyper Decoder) to obtain mean_Y.

3. Process z_Y_hat obtained in step 1 through the Y component hyperprior variance decoding network (Y Hyper Scale Decoder) to obtain variance_Y.

4. Obtain a Gaussian probability distribution function with a mean of 0 and a standard deviation of variance_Y based on variance_Y generated in step 2, and process the second bitstream bit_y_Y through an entropy decoder (Lossless Decoder) to obtain residual_Y_hat.

5. Add residual_Y_hat obtained in step 4 and mean_Y obtained in step 2, to obtain y1_Y.

6. Process y1_Y obtained in step 5 through a Y component decoding (Y Decoder) network to obtain a Y component of a reconstructed image.

7. Process the third bitstream bit_z_UV through the entropy decoder (Lossless Decoder) to obtain z_UV_hat.

8. Process z_UV_hat obtained in step 7 through the UV component hyperprior decoding network (UV Hyper Decoder) to obtain mean_UV.

9. Process z_UV_hat obtained in step 7 through the UV component hyperprior variance decoding network (UV Hyper Scale Decoder) to obtain variance_UV.

10. Obtain a Gaussian probability distribution function with a mean of 0 and a standard deviation of variance_UV based on variance_UV generated in step 9, and process the fourth bitstream bit_y_UV through the entropy decoder (Lossless Decoder) to obtain residual_UV_hat.

11. Add residual_UV_hat obtained in step 10 and mean_UV obtained in step 8, to obtain y1_UV.

12. **Perform channel** concatenation **on** y1_Y obtained **in** step 5 **and** y1_UV **obtained in** step **11, to obtain** y1.

13. Process y1 obtained **in** step 12 through a convolutional layer to **obtain** y2.

14. Add y2 obtained **in** step 13 and y1_UV obtained **in** step **11, to obtain** y3.

15. Input y3 obtained in step 14 into a UV component decoding (UV Decoder) network, perform upsampling three times in the UV Decoder network, and then perform upsampling once on an output of the UV Decoder, to obtain a UV component of the reconstructed image. (The UV Decoder network includes three times of upsampling.)

16. Concatenate the Y component obtained in step 6 and the UV component obtained in step 15, and then perform color conversion to obtain a reconstructed RGB image.

A difference of this embodiment from the embodiment shown in FIG. 8 lies in steps 12 to 14 in bold at the decoder side above. The method of adding two feature tensors is used in this embodiment.

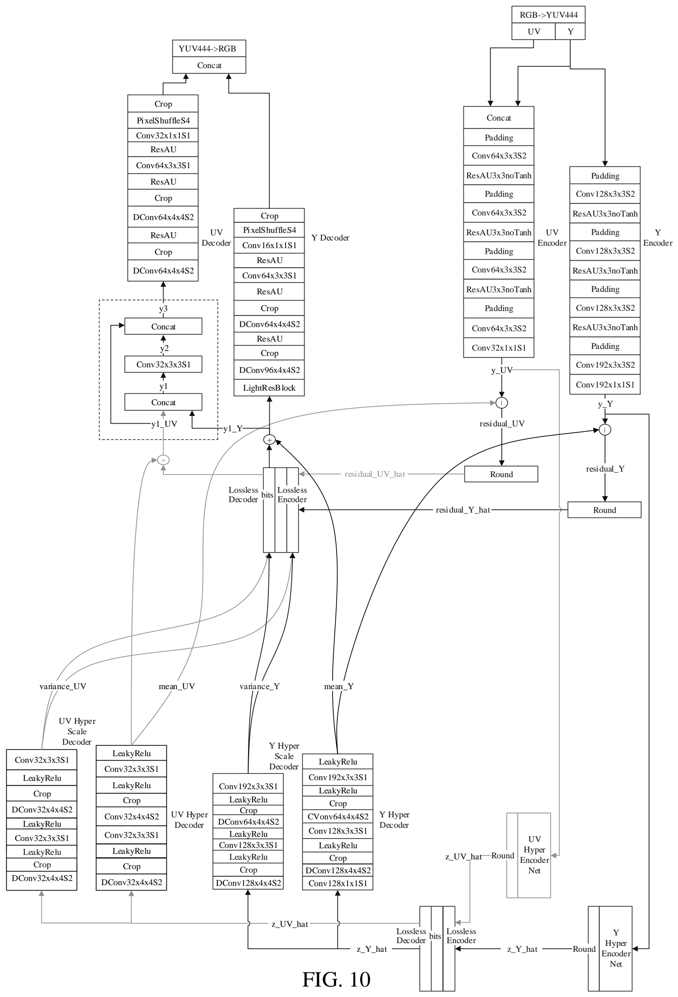

FIG. 10 is a diagram of a structure of JEPG AI using a fusion structure. As shown in FIG. 10, the JEPG AI uses the fusion structure shown in FIG. 7a or FIG. 7b, and its processing process is as follows:

Encoder side:

1. Convert an original RGB image into a YUV444 image through color space conversion.

2. Decompose the YUV444 image obtained in step 1 by channel, to obtain a Y component and a UV component.

3. Input the Y component obtained in step 2 into a Y component encoding (Y Encoder) network, and perform downsampling four times to obtain y_Y.

4. Process y_Y obtained in step 3 through a Y component hyperprior encoding network (Y Hyper Encoder Net), and then perform round-to-nearest quantization to obtain z_Y_hat.

5. Process z_Y_hat obtained in step 4 through an entropy encoder (Lossless Encoder) to obtain a first bitstream, which is denoted as bit_z_Y.

6. Process z_Y_hat obtained in step 4 through a Y component hyperprior decoding network (Y Hyper Decoder) to obtain mean_Y.

7. Process z_Y_hat obtained in step 4 through a Y component hyperprior variance decoding network (Y Hyper Scale Decoder) to obtain variance_Y.

8. Subtract mean_Y obtained in step 6 from y_Y obtained in step 3 to obtain residual _Y, and perform round-to-nearest quantization to obtain residual_Y_hat.

9. Obtain a Gaussian probability distribution function with a mean of 0 and a standard deviation of variance_Y based on variance_Y generated in step 7, and process residual_Y_hat obtained in step 8 through an entropy encoder (Lossless Encoder) to obtain a second bitstream, which is denoted as bit_y_Y.

**10. Input the Y component and the UV component obtained in step 2 into a UV component encoding (UV Encoder) network and perform**

**downsampling four times in the UV Encoder network to obtain y_UV. (The UV Encoder network includes four times of downsampling.)**

11. Process y_UV obtained in step 10 through a UV component hyperprior encoding network (UV Hyper Encoder Net), and then perform round-to-nearest quantization to obtain z_UV_hat.

12. Process z_UV_hat obtained in step 11 through the entropy encoder (Lossless Encoder) to obtain a third bitstream, which is denoted as bit_z_UV.

13. Process z_UV_hat obtained in step 11 through a UV component hyperprior decoding network (UV Hyper Decoder) to obtain mean_UV.

14. Process z_UV_hat obtained in step 11 through a UV component hyperprior variance decoding network (UV Hyper Scale Decoder) to obtain variance_UV.

15. Subtract mean_UV output in step 13 from y_UV output in step 10 to obtain residual_ UV, and perform round-to-nearest quantization to obtain residual_UV_hat.

16. Obtain a Gaussian probability distribution function with a mean of 0 and a standard deviation of variance_UV based on variance_UV generated in step 14, and process residual_UV_hat obtained in step 15 through the entropy encoder (Lossless Encoder) to obtain a fourth bitrate, which is denoted as bit_y_UV.

17. Obtain a sum of the foregoing four bitstreams as a final encoded bitstream.

Decoder side:

1. Process the first bitstream bit_z_Y through an entropy decoder (Lossless Decoder) to obtain z_Y_hat.

2. Process z_Y_hat obtained in step 1 through the Y component hyperprior decoding network (Y Hyper Decoder) to obtain mean_Y.

3. Process z_Y_hat obtained in step 1 through the Y component hyperprior variance decoding network (Y Hyper Scale Decoder) to obtain variance_Y.

4. Obtain a Gaussian probability distribution function with a mean of 0 and a standard deviation of variance_Y based on variance_Y generated in step 2, and process the second bitstream bit_y_Y through an entropy decoder (Lossless Decoder) to obtain residual_Y_hat.

5. Add residual_Y_hat obtained in step 4 and mean_Y obtained in step 2, to obtain y1_Y.

6. Process y1_Y obtained in step 5 through a Y component decoding (Y Decoder) network to obtain a Y component of a reconstructed image.

7. Process the third bitstream bit_z_UV through the entropy decoder (Lossless Decoder) to obtain z_UV_hat.

8. Process z_UV_hat obtained in step 7 through the UV component hyperprior decoding network (UV Hyper Decoder) to obtain mean_UV.

9. Process z_UV_hat obtained in step 7 through the UV component hyperprior variance decoding network (UV Hyper Scale Decoder) to obtain variance_UV.

10. Obtain a Gaussian probability distribution function with a mean of 0 and a standard deviation of variance_UV based on variance_UV generated in step 9, and process the fourth bitstream bit_y_UV through the entropy decoder (Lossless Decoder) to obtain residual_UV_hat.

11. Add residual_UV_hat obtained in step 10 and mean_UV obtained in step 8, to obtain y1_UV.

12. Perform channel concatenation on y1_Y obtained in step 5 and y1_UV obtained in step 11, to obtain y1.

13. Process y1 obtained in step 12 through a convolutional layer to obtain y2.

14. Perform channel concatenation on y2 obtained in step 13 and y1_UV obtained in step 11, to obtain y3.

**15. Input y3 obtained in step 14 into a UV component decoding (UV Decoder) network, and perform upsampling four times in the UV Decoder network (optionally, the four times of upsampling may be implemented by performing two scales of upsampling through two deconvolution modules and then two scales of upsampling through pixel shuffle (pixelshuffle)), to obtain a UV component of the reconstructed image. (The UV Decoder network includes four times of upsampling.)**

16. Concatenate the Y component obtained in step 6 and the UV component obtained in step 15, and then perform color conversion to obtain a reconstructed RGB image.

A difference of this embodiment from the embodiment shown in FIG. 8 lies in step 10 in bold at the encoder side and step 15 in bold at the decoder side above. Specifically, at the encoder side, no downsampling is performed on the Y component and the UV component, and a quantity of times of downsampling in the UV Encoder changes from three to four; and at the decoder side, a quantity of times of upsampling in the UV Decoder also changes from three to four, and no upsampling is performed on the output of the UV Decoder.

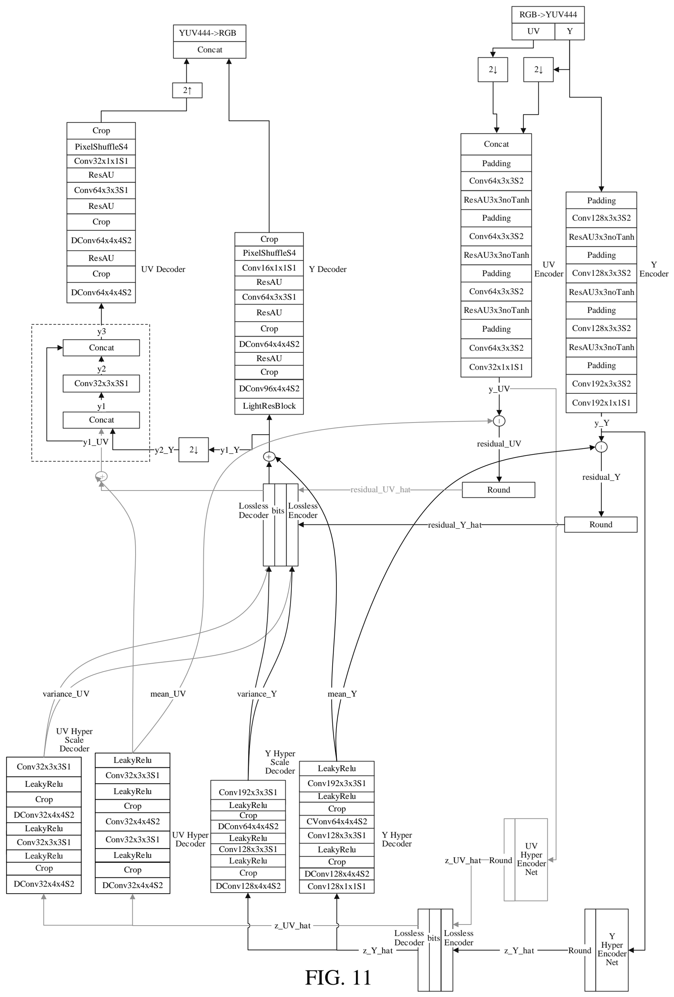

FIG. 11 is a diagram of a structure of JEPG AI using a fusion structure. As shown in FIG. 11, the JPEG AI uses the fusion structure shown in FIG. 7a or FIG. 7b, and its processing process is as follows:

Encoder side:

1. Convert an original RGB image into a YUV444 image through color space conversion.

2. Decompose the YUV444 image obtained in step 1 by channel, to obtain a Y component and a UV component.

3. Input the Y component obtained in step 2 into a Y component encoding (Y Encoder) network, and perform downsampling four times to obtain y_Y.

4. Process y_Y obtained in step 3 through a Y component hyperprior encoding network (Y Hyper Encoder Net), and then perform round-to-nearest quantization to obtain z_Y_hat.

5. Process z_Y_hat obtained in step 4 through an entropy encoder (Lossless Encoder) to obtain a first bitstream, which is denoted as bit_z_Y.

6. Process z_Y_hat obtained in step 4 through a Y component hyperprior decoding network (Y Hyper Decoder) to obtain mean_Y.

7. Process z_Y_hat obtained in step 4 through a Y component hyperprior variance decoding network (Y Hyper Scale Decoder) to obtain variance_Y.

8. Subtract mean_Y obtained in step 6 from y_Y obtained in step 3 to obtain residual _Y, and perform round-to-nearest quantization to obtain residual_Y_hat.

9. Obtain a Gaussian probability distribution function with a mean of 0 and a standard deviation of variance_Y based on variance_Y generated in step 7, and process residual_Y_hat obtained in step 8 through an entropy encoder (Lossless Encoder) to obtain a second bitstream, which is denoted as bit_y_Y.

**10. Separately perform downsampling once on the Y component and the UV component obtained in step 2, and then input downsampled components into a UV component encoding (UV Encoder) network and perform downsampling four times in the UV Encoder network to obtain y_UV. (The UV Encoder network includes four times of downsampling.)**

11. Process y_UV obtained in step 10 through a UV component hyperprior encoding network (UV Hyper Encoder Net), and then perform round-to-nearest quantization to obtain z_UV_hat.

12. Process z_UV_hat obtained in step 11 through the entropy encoder (Lossless Encoder) to obtain a third bitstream, which is denoted as bit_z_UV.

13. Process z_UV_hat obtained in step 11 through a UV component hyperprior decoding network (UV Hyper Decoder) to obtain mean_UV.

14. Process z_UV_hat obtained in step 11 through a UV component hyperprior variance decoding network (UV Hyper Scale Decoder) to obtain variance_UV.

15. Subtract mean_UV output in step 13 from y_UV output in step 10 to obtain residual_ UV, and perform round-to-nearest quantization to obtain residual_UV_hat.

16. Obtain a Gaussian probability distribution function with a mean of 0 and a standard deviation of variance_UV based on variance_UV generated in step 14, and process residual_UV_hat obtained in step 15 through the entropy encoder (Lossless Encoder) to obtain a fourth bitrate, which is denoted as bit_y_UV.

17. Obtain a sum of the foregoing four bitstreams as a final encoded bitstream.

Decoder side:

1. Process the first bitstream bit_z_Y through an entropy decoder (Lossless Decoder) to obtain z_Y_hat.

2. Process z_Y_hat obtained in step 1 through the Y component hyperprior decoding network (Y Hyper Decoder) to obtain mean_Y.

3. Process z_Y_hat obtained in step 1 through the Y component hyperprior variance decoding network (Y Hyper Scale Decoder) to obtain variance_Y.

4. Obtain a Gaussian probability distribution function with a mean of 0 and a standard deviation of variance_Y based on variance_Y generated in step 2, and process the second bitstream bit_y_Y through an entropy decoder (Lossless Decoder) to obtain residual_Y_hat.

5. Add residual_Y_hat obtained in step 4 and mean_Y obtained in step 2, to obtain y1_Y.

6. Process y1_Y obtained in step 5 through a Y component decoding (Y Decoder) network to obtain a Y component of a reconstructed image.

7. Process the third bitstream bit_z_UV through the entropy decoder (Lossless Decoder) to obtain z_UV_hat.

8. Process z_UV_hat obtained in step 7 through the UV component hyperprior decoding network (UV Hyper Decoder) to obtain mean_UV.

9. Process z_UV_hat obtained in step 7 through the UV component hyperprior variance decoding network (UV Hyper Scale Decoder) to obtain variance_UV.

10. Obtain a Gaussian probability distribution function with a mean of 0 and a standard deviation of variance_UV based on variance_UV generated in step 9, and process the fourth bitstream bit_y_UV through the entropy decoder (Lossless Decoder) to obtain residual_UV_hat.

11. Add residual_UV_hat obtained in step 10 and mean_UV obtained in step 8, to obtain y1_UV.

12. Perform downsampling once on y1_Y obtained in step 5 to obtain y2_Y, and perform channel concatenation on y2_Y and y1_UV obtained in step 11 to obtain y1.

13. Process y1 obtained in step 12 through a convolutional layer to obtain y2.

14. Perform channel concatenation on y2 obtained in step 13 and y1_UV obtained in step 11, to obtain y3.

**15. Input y3 obtained in step 14 into a UV component decoding (UV Decoder) network, perform upsampling four times in the UV Decoder network, and then perform upsampling once on an output of the UV Decoder, to obtain a UV component of the reconstructed image. (The UV Decoder network includes four times of upsampling.)**

16. Concatenate the Y component obtained in step 6 and the UV component obtained in step 15, and then perform color conversion to obtain a reconstructed RGB image.

A difference of this embodiment from the embodiment shown in FIG. 8 lies in step 10 in bold at the encoder side and step 15 in bold at the decoder side above. Specifically, at the encoder side, a quantity of times of downsampling in the UV Encoder changes from three to four; and at the decoder side, a quantity of times of upsampling in the UV Decoder also changes from three to four.

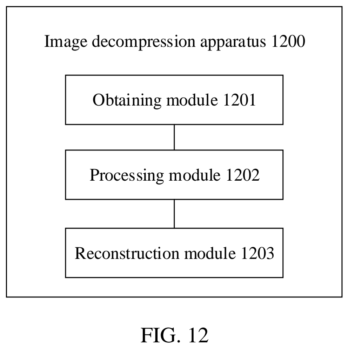

FIG. 12 is a diagram of a structure of an image decompression apparatus 1200 according to an embodiment of this application. As shown in FIG. 12, the image decompression apparatus 1200 in this embodiment may be used at a decoder side. The image decompression apparatus 1200 may include an obtaining module 1201, a processing module 1202, and a reconstruction module 1203.

The obtaining module 1201 is configured to obtain a first feature tensor, where the first feature tensor corresponds to a first component of a reconstructed image; and obtain a second feature tensor, where the second feature tensor corresponds to a second component of the reconstructed image. The processing module 1202 is configured to perform concatenation and convolution on the first feature tensor and the second feature tensor to obtain a third feature tensor; and obtain a fourth feature tensor based on the third feature tensor and the second feature tensor. The reconstruction module 1203 is configured to obtain the reconstructed image based on the first feature tensor and the fourth feature tensor.

In a possible implementation, the processing module 1202 is specifically configured to concatenate the third feature tensor and the second feature tensor to obtain the fourth feature tensor.

In a possible implementation, the processing module 1202 is specifically configured to add the third feature tensor and the second feature tensor to obtain the fourth feature tensor.

In a possible implementation, the processing module 1202 is specifically configured to perform channel extraction on the second feature tensor to obtain a fifth feature tensor; and concatenate the third feature tensor and the fifth feature tensor to obtain the fourth feature tensor.

In a possible implementation, the processing module 1202 is specifically configured to perform channel extraction on the second feature tensor to obtain a fifth feature tensor; and add the third feature tensor and the fifth feature tensor to obtain the fourth feature tensor.

In a possible implementation, the first component is a Y component, and the second component is a UV component.

The apparatus in this embodiment may be configured to execute the technical solutions of the method embodiment shown in FIG. 6. Implementation principles and technical effects are similar. Details are not described herein again.

In an implementation process, steps in the foregoing method embodiments may be performed by an integrated logic circuit of hardware in a processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the method disclosed in embodiments of this application may be directly presented as being performed and completed by a hardware encoding processor, or performed and completed by a combination of hardware in the encoding processor and a software module. The software module may be located in a mature storage medium in the art, such as a random access memory, a flash memory, a read-only memory, a programmable read-only memory, an electrically erasable programmable memory, or a register. The storage medium is located in a memory. The processor reads information in the memory, and completes the steps of the foregoing method in combination with hardware in the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

If implemented in a form of a software functional unit and sold or used as a standalone product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image decompression method, comprising:

    obtaining a first feature tensor, wherein the first feature tensor corresponds to a first component of a reconstructed image;
    obtaining a second feature tensor, wherein the second feature tensor corresponds to a second component of the reconstructed image;
    performing concatenation and convolution on the first feature tensor and the second feature tensor to obtain a third feature tensor;
    obtaining a fourth feature tensor based on the third feature tensor and the second feature tensor; and
    obtaining the reconstructed image based on the first feature tensor and the fourth feature tensor.

2. The method according to claim 1, wherein obtaining the fourth feature tensor based on the third feature tensor and the second feature tensor comprises:
    concatenating the third feature tensor and the second feature tensor to obtain the fourth feature tensor.

3. The method according to claim 1, wherein the obtaining the fourth feature tensor based on the third feature tensor and the second feature tensor comprises:
    adding the third feature tensor and the second feature tensor to obtain the fourth feature tensor.

4. The method according to any one of claims 1 to 3, wherein the obtaining the fourth feature tensor based on the third feature tensor and the second feature tensor comprises:

    performing channel extraction on the second feature tensor to obtain a fifth feature tensor; and
    concatenating the third feature tensor and the fifth feature tensor to obtain the fourth feature tensor.

5. The method according to any one of claims 1 to 3, wherein the obtaining the fourth feature tensor based on the third feature tensor and the second feature tensor comprises:

    performing channel extraction on the second feature tensor to obtain a fifth feature tensor; and
    adding the third feature tensor and the fifth feature tensor to obtain the fourth feature tensor.

6. The method according to any one of claims 1 to 5, wherein the first component is a Y component, and the second component is a UV component.

7. An image decompression apparatus, comprising:

    an obtaining module, configured to obtain a first feature tensor, wherein the first feature tensor corresponds to a first component of a reconstructed image; and obtain a second feature tensor, wherein the second feature tensor corresponds to a second component of the reconstructed image;
    a processing module, configured to perform concatenation and convolution on the first feature tensor and the second feature tensor to obtain a third feature tensor; and obtain a fourth feature tensor based on the third feature tensor and the second feature tensor; and
    a reconstruction module, configured to obtain the reconstructed image based on the first feature tensor and the fourth feature tensor.

8. The apparatus according to claim 7, wherein the processing module is specifically configured to concatenate the third feature tensor and the second feature tensor to obtain the fourth feature tensor.

9. The apparatus according to claim 7, wherein the processing module is specifically configured to add the third feature tensor and the second feature tensor to obtain the fourth feature tensor.

10. The apparatus according to any one of claims 7 to 9, wherein the processing module is specifically configured to perform channel extraction on the second feature tensor to obtain a fifth feature tensor; and concatenate the third feature tensor and the fifth feature tensor to obtain the fourth feature tensor.

11. The apparatus according to any one of claims 7 to 9, wherein the processing module is specifically configured to perform channel extraction on the second feature tensor to obtain a fifth feature tensor; and add the third feature tensor and the fifth feature tensor to obtain the fourth feature tensor.

12. The apparatus according to any one of claims 7 to 11, wherein the first component is a Y component, and the second component is a UV component.

13. An electronic device, comprising:

 one or more processors; and
 a memory, configured to store one or more programs; wherein
 when the one or more programs are executed by the one or more processors, the one or more processors are enabled to implement the method according to any one of claims 1 to 6.

14. A computer-readable storage medium, comprising a computer program, wherein when the computer program is executed on a computer, the computer is enabled to perform the method according to any one of claims 1 to 6.

15. A computer program product, wherein the computer program product comprises computer program code, and when the computer program code is run on a computer, the computer is enabled to perform the method according to any one of claims 1 to 6.

Hyperprior entropy estimation network

Entropy estimation

Quantization → Entropy encoding → Bitstream → Entropy decoding

Hyperprior encoding network

Hyperprior decoding network

Quantization → Entropy encoding → Bitstream → Entropy decoding

Encoding network

Decoding network

Image/Video

Reconstructed image/video

FIG. 1

FIG. 2

FIG. 3

**Compression process**

Local | Cloud

Image/Video → Encoding → Decoding → AI encoding → Bitstream/ Image file

**Decompression process**

Reconstructed image/video ← Decoding ← Encoding ← AI decoding ← Bitstream/ Image file

FIG. 4

FIG. 5a

FIG. 5b

600

Obtain a first feature tensor, where the first feature tensor corresponds to a first component of a reconstructed image — 601

Obtain a second feature tensor, where the second feature tensor corresponds to a second component of the reconstructed image — 602

Perform concatenation and convolution on the first feature tensor and the second feature tensor to obtain a third feature tensor — 603

Obtain a fourth feature tensor based on the third feature tensor and the second feature tensor — 604

Obtain the reconstructed image based on the first feature tensor and the fourth feature tensor — 605

FIG. 6

FIG. 7a

FIG. 7b

FIG. 7c

FIG. 7d

FIG. 8

FIG. 9

**FIG. 10**

FIG. 11

Image decompression apparatus 1200

Obtaining module 1201

Processing module 1202

Reconstruction module 1203

FIG. 12

## INTERNATIONAL SEARCH REPORT

| International application No. |
|---|
| **PCT/CN2024/074696** |

**A. CLASSIFICATION OF SUBJECT MATTER**

G06T9/00(2006.01)i

According to International Patent Classification (IPC) or to both national classification and IPC

**B. FIELDS SEARCHED**

Minimum documentation searched (classification system followed by classification symbols)

G06T9/-

Documentation searched other than minimum documentation to the extent that such documents are included in the fields searched

Electronic data base consulted during the international search (name of data base and, where practicable, search terms used)

CNTXT, CNABS, ENTXTC, ENTXT, USTXT, VEN, CNKI, IEEE: 华为, 视频, 编码, 神经网络, 色度, 亮度, 特征张量, 分量, 拼接, 抽取, 相加, 融合, 优化, 卷积, huawei, video, JVET, AA0063(标准提案编号), coder, neural network, luma, chroma, feature?, component?, concat+, add+, extract+, UV, fusion, optimiz+, convolution.

**C. DOCUMENTS CONSIDERED TO BE RELEVANT**

| Category* | Citation of document, with indication, where appropriate, of the relevant passages | Relevant to claim No. |
|---|---|---|
| Y | KOYUNCU, E.et al. "Device Interoperability for Learned Image Compression with Weights and Activations Quantization" *2022 Picture Coding Symposium(PCS)*, 20 January 2023 (2023-01-20), 151-155 ISSN: 2472-7822, text, page 153, section II, and figure 2 | 1-3, 5-9, 11-15 |
| Y | WO 2023283202 A1 (BEIJING DAJIA INTERNET INFORMATION TECHNOLOGY CO., LTD. et al.) 12 January 2023 (2023-01-12) description, paragraphs [0088]-[0091] and [0142], and figures 13-15 and 17 | 1-3, 5-9, 11-15 |
| A | WO 2022126120 A1 (QUALCOMM INC.) 16 June 2022 (2022-06-16) entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 March 2024** | **04 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074696**

| Patent document cited in search report | | | Publication date (day/month/year) | Patent family member(s) | | | Publication date (day/month/year) |
|---|---|---|---|---|---|---|---|
| WO | 2023283202 | A1 | 12 January 2023 | CN | 117643053 | A | 01 March 2024 |
| WO | 2022126120 | A1 | 16 June 2022 | TW | 202243476 | A | 01 November 2022 |
| | | | | KR | 20230117346 | A | 08 August 2023 |
| | | | | EP | 4260561 | A1 | 18 October 2023 |
| | | | | US | 20220191523 | A1 | 16 June 2022 |
| | | | | IN | 202347028869 | A | 16 June 2023 |
| | | | | BR | 112023010764 | A2 | 27 June 2023 |
| | | | | CN | 116547965 | A | 04 August 2023 |
| | | | | VN | 97900 | A | 25 September 2023 |
| | | | | JP | 2023553369 | W | 21 December 2023 |

Form PCT/ISA/210 (patent family annex) (July 2022)